# EUROPEAN PATENT SPECIFICATION

(11) **EP 3 613 270 B1**
(45) Date of publication and mention of the grant of the patent: **31.03.2021**
(21) Application number: 19155041.7
(22) Date of filing: 01.02.2019
(51) Int. Cl.: A01D 34/00

(54) **INTELLIGENT MOWER BASED ON LIDAR MAP BUILDING**
INTELLIGENTER MÄHER AUF BASIS VON LIDAR-KARTENERSTELLUNG
TONDEUSE INTELLIGENTE BASÉE SUR LA CONSTRUCTION DE CARTES DE LIDAR

(30) Priority: 24.08.2018 CN 201810974853
(43) Date of publication of application: 26.02.2020
(73) Proprietor: Ningbo NGP Industry Co., Ltd., Ningbo, Zhejiang 315000 (CN)
(72) Inventor: CHEN, Jianping, NINGBO, Zhejiang 315000 (CN); WANG, Shuang, NINGBO, Zhejiang 315000 (CN); YAO, Kejie, NINGBO, Zhejiang 315000 (CN)
(74) Representative: Dr. Gassner & Partner mbB

(56) References cited:
- EP-A1- 2 884 364
- EP-A1- 2 926 642
- WO-A1-2018/000922
- US-A1- 2016 174 459

## Description

### Technical Field

The present invention relates to a mower and in particular relates to an intelligent mower based on lidar map building.

### Background Art

A mower is also called a weeder, a grass cutter, a lawn trimmer and the like. The mower is a mechanical tool for trimming lawns, vegetable covers and the like and is composed of a cutterhead, an engine, a walking wheel, a walking mechanism, a blade, a handrail and a control part.

The cutterhead is mounted on the walking wheel and is provided with the engine, an output shaft of the engine is provided with the blade, and the speed of the blade is greatly increased by virtue of the high-speed rotation of the engine, so that the working time of a weeding worker is shortened, and the manpower is greatly reduced.

With the development of urban construction and the improvement of environmental protection consciousness of people, the urban greening level has become a standard for measuring the urban development level and the life quality of people. In recent years, green spaces on urban squares and residential districts are increased day by day, and the workload for maintaining a lawn gets heavier and heavier, and therefore, people start to try to realize an intelligent mowing method by utilizing an electronic information technology.

When the mower is used for mowing in a new environment, it is required that a field is detected by working staff in real time and data are transmitted to the mower, so that an electronic map is built to be used by the mower, and re-measurement and re-input are required for different lawns to result in low working efficiency, and therefore, there is still an improvement space.

WO-A1-2018/000922 relates to an autonomous lawn mower comprising: a mower body having at least one motor arranged to drive a cutting blade and to propel the mower body on an operating surface via a wheel arrangement, wherein the mower body includes a navigation system arranged to assist a controller to control the operation of the mower body within a predefined operating area.

### Summary of the Invention

In order to overcome defects in the prior art, the present invention aims at providing an intelligent mower based on lidar map building, and the mower body may realize automatic scanning without manual input and may automatically build and update the electronic map for cutting.

The technical object of the present invention is achieved according to the following technical solution:
an intelligent mower based on lidar map building comprises a mower body arranged in a lawn, a fence for limiting the range of the lawn and a charging socket arranged in the lawn and used for charging the mower body and further comprises:
a master control module arranged on the mower body and used for storing and processing data and coordinating other modules;
a feature information module used for allowing the mower body to identify the position of the charging socket;
a lidar scanning module arranged on the mower body, connected with the master control module and used for acquiring data and building an electronic map; and
a walking control module connected with the master control module and used for controlling the mower body to move; and
a mowing control module connected with the master control module and used for controlling the mower body to cut the lawn;
the lidar scanning module comprises:
   a constant-speed circumferential rotation unit used for controlling a laser transmitting and
   receiving unit to rotate at constant speed and outputting a circumferential rotation angle signal;
   and the laser transmitting and receiving unit used for outputting a laser ranging signal and a laser intensity signal and uploading the laser ranging signal and the laser intensity signal to the master control module;
   the fence is used for limiting the range of the lawn, and objects which may be detected by the lidar scanning module include walls, hedges, shrubs and light reflecting components; when the mower body is started, the master control module sends a starting signal and activates the constant-speed circumferential rotation unit and the laser transmitting and receiving unit to build the electronic map;
   after receiving the laser ranging signal, the laser intensity signal and the rotation angle signal, the master control module builds the electronic map containing a boundary and a barrier on a current position;
   the walking control module drives the mower body to advance towards the generated electronic map, performs repeated feedback by virtue of the lidar scanning module and corrects the electronic map on the current position;
   the master control module controls the walking control module to continuously walk and corrects the electronic map on different positions;
   the walking control module and the mowing control module receive the starting signal and start to work when leaving the charging socket, the walking control module moves towards the side, close to the fence, in the electronic map and drives along the fence of the lawn, and the master control module updates electronic map information and real-time position information of the mower body on the electronic map;
   when an initial starting position of the mower body is consistent with the current position, the master control module builds complete electronic map information of the lawn and plans a mowing path of the mower body; and
   after the mower body completes cutting according to the path planning, the lidar scanning module identifies the feature information module and advances towards the position where the charging socket is located so as to realize charging.

By adopting the scheme, the charging socket is used for supplementing electric energy for the mower body, the master control module is used for processing data and coordinating and controlling each module, the lidar scanning module may rotate for 360 DEG, so that the lidar scanning module is more convenient to use and more comprehensive in detection, the acquired laser ranging signal, the circumferential rotation angle signal and the laser intensity signal are transmitted to the master control module so as to be processed, the electronic map is built by the master control module by virtue of information of a lidar module so as to be used for mowing, due to the arrangement of the feature information module, the charging socket is easier to identify, and the lidar scanning module may identify the charging socket according to the inconsistency of reflecting information of the feature information module and reflection information of other objects; and the lidar scanning module may restore the features of the model according to the scanning information, so that the object is determined to be the charging socket, and the electronic map may be stored in the master control module after being generated so as to be convenient to clear.

The intelligent mower based on lidar map building further comprises a proximity detection module arranged on the mower body, connected with the master control module and used for detecting a distance from the mower body to the fence and the barrier in the lawn and outputting a proximity detection signal;
a steering reference signal corresponding to a nearest steering distance from the mower body to the fence and the barrier in the lawn is preset in a master control terminal;
and the master control module controls the mower body to slow down when the proximity detection signal output by the proximity detection module is smaller than a buffer reference signal.

By adopting the scheme, the distance from the mower body to the fence is detected due to the arrangement of the proximity detection module, and the mower body steers once the front end of the mower body is smaller than the steering reference signal, so that high practicability is achieved.

The buffer reference signal corresponding to a buffer steering distance from the mower body to the fence is preset in a master control terminal; and the master control module controls the mower body to slow down when the proximity detection signal output by the proximity detection module is smaller than the buffer reference signal.

By adopting the scheme, the distance from the mower body to the fence is further detected, and the mower body is controlled to slow down once the mower body is close to the fence and the proximity detection signal is smaller than the buffer reference signal, so that buffering is performed, the waste of electric energy is reduced, and meanwhile, it is also convenient for the mower body to steer.

Preferably, the intelligent mower based on lidar map building further comprises:
a user interaction module connected with the master control module and used for establishing communication and performing data transmission; and
a display module connected with the user interaction module and used for displaying a current position of the mower body on the electronic map.

By adopting the scheme, the user interaction module is connected with the master control module and also performs wireless transmission, and the display module is arranged on the user interaction module, is used for making a user know about the position of the mower body and is also matched with the electronic map, so that the position may be displayed on the electronic map, and high practicability is achieved.

Preferably, the intelligent mower based on lidar map building further comprises:
a cutting path module connected with the user interaction module and used for controlling the mower body to cut according to a path;
and a path setting module connected with the user interaction module and used for setting the path on the electronic map by a user and outputting a path setting signal;
the path setting signal is received and stored by the user interaction module so as to be called by the cutting path module; and
the cutting path module takes an updated path setting signal as a first called object and keeps the subsequent calling of the object when the path setting signal is updated.

By adopting the scheme, the mower body performs cutting according to a cutting path due to the arrangement of the cutting path module, and meanwhile, the path setting module voluntarily sets the cutting path, so that higher flexibility and high practicability are achieved.

Preferably, the intelligent mower based on lidar map building further comprises:
a recording module connected with the user interaction module and used for collecting the path setting signal output every time and sorting and recording the path setting signal according to a time sequence; and
a selecting module connected with the user interaction module and used for calling the path setting signal in the recording module so as to start the cutting path module.

By adopting the scheme, the path setting signal output every time is recorded due to the arrangement of the recording module and is also sorted according to the time sequence, and a former path setting signal in the recording module is selected due to the arrangement of the selecting module, so that high practicability is achieved.

Preferably, the intelligent mower based on lidar map building further comprises a task progress module connected with the user interaction module and used for counting the completeness of the path setting signal in the current cutting path module, the master control terminal outputs a locating signal corresponding to the current position on the current position;
the lidar scanning module comprises:
a remaining path unit used for analyzing and displaying a passed path and an unpassed path of the path setting module according to a percentage through the locating signal; and a remaining time unit used for obtaining remaining time by dividing the working speed of the mower body by the unpassed path in the remaining path unit and displaying the remaining time.

By adopting the scheme, the user may intuitively know about the current task percentage due to the arrangement of the task progress module and may know about the remaining time due to the matching of the remaining time unit, so that display and counting are convenient to realize.

Preferably, the intelligent mower based on lidar map building further comprises:
a lawn height detection module arranged on the mower body and used for detecting the height before the lawn is trimmed every time and outputting a lawn height detection signal; and
a trimming module used for recording trimming time for trimming the lawn every time, generating a trimming signal and uploading the trimming signal to the master control module; a trimming reference signal corresponding to reference time for starting every time and a height reference signal corresponding to the largest height of the lawn are preset in the user interaction module;
when the trimming module is started to trim the lawn, the height of the lawn is detected, and a lawn height detection signal is output, and when the lawn height detection signal is larger than the height reference signal, the user interaction module corrects the trimming reference signal so that early trimming is realized; and
a later trimming reference signal is not changed when a former trimming reference signal is corrected.

By adopting the scheme, the height of the lawn is detected due to the arrangement of the lawn height detection module, so that a lawn to be trimmed is known, the current trimming time is counted due to the arrangement of the trimming module, the trimming reference signal is corrected due to the matching of the height reference signal, and the corrected result is only used for correcting the current time instead of the next trimming, so that influences brought by seasonal difference are reduced, and high practicability is achieved.

Preferably, the intelligent mower based on lidar map building further comprises a synchronization module connected with the user interaction module and used for synchronizing a corrected trimming reference signal in a current region, and the trimming module is connected with the synchronization module and is used for correcting the trimming reference signal in the current region.

By adopting the scheme, due to the arrangement of the synchronization module, the growth states of all lawns in the current region are regulated to be directly called, so that the trimming time is more reasonable, and high practicability is achieved.

In conclusion, the intelligent mower based on lidar map building has the following beneficial effects:
1. the mower body may realize automatic scanning without manual input and may automatically build and update the electronic map for cutting; and
2. due to the matching of the user interaction module, the trimming state is viewed in real time, so that high practicability is achieved.

### Brief Description of the Drawings

Fig. 1 is a schematic diagram of electronic map building of an intelligent mower based on lidar map building;
Fig. 2 is a system block diagram of the intelligent mower based on lidar map building;
Fig. 3 is a system flow diagram of a distance detection module;
Fig. 4 is a system flow diagram of a proximity detection module;
Fig. 5 is a system flow diagram of a path setting module;
Fig. 6 is a system flow diagram of a task progress module; and
Fig. 7 is a system flow diagram of a lawn height detection module.

Reference Symbols: 1. mower body; 2. fence; 3. charging socket; 4. master control module; 5. lidar scanning module; 6. walking control module; 7. mowing control module; 9. electronic map; 11. safety driving module; 12. proximity detection module; 13. user interaction module; 14. display module; 15. cutting path module; 16. path setting module; 17. recording module; 18. selecting module; 19. task progress module; 20. remaining path unit; 21. remaining time unit; 22. lawn height detection module; 23. trimming module; 24. synchronization module; 25. feature information module; 26. constant-speed circumferential rotation unit; and 27. laser transmitting and receiving unit.

### Detailed Description of the Invention

The present invention is further described below in combination with accompanying drawings 1-7.

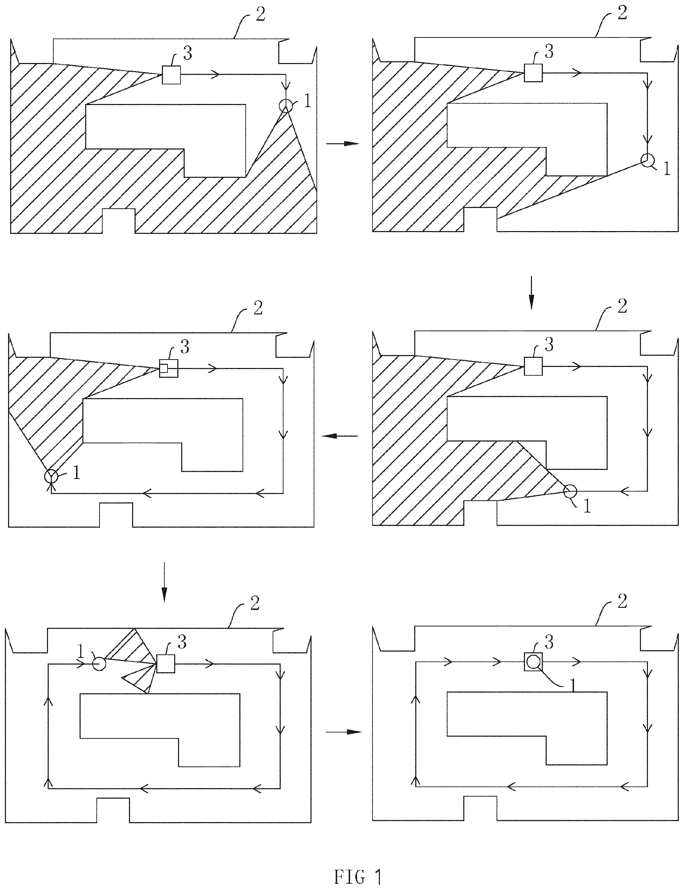

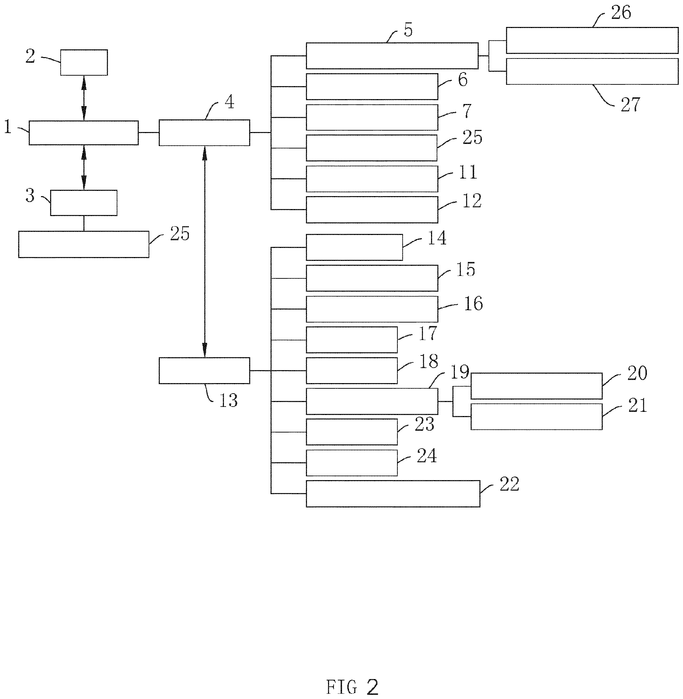

As shown in Fig. 1, the intelligent mower based on lidar map building, disclosed by the embodiment, comprises a mower body 1 arranged in the lawn, a fence 2 for maintaining the lawn and a charging socket 3 arranged in the lawn and used for charging the mower body 1. The fence 2 is detected by a lidar scanning module 5, and objects which may be detected by the lidar scanning module 5 include walls, hedges, shrubs and light reflecting components; and
as shown in Fig. 2, an initial position of the mower body 1 is located on the charging socket 3 used for charging the mower body 1, the mower drives in the fence 2 to realize cutting, the mower body 1 is further provided with a master control module 4, the master control module 4 is in wireless connection with a user interaction module 13, and a network or a Bluetooth may be adopted as a wireless connection way.

In the embodiment, the user interaction module 13 may adopt a smart mobile phone, a tablet personal computer and a smart watch, and the master control module 4 is a microcomputer or a single chip microcomputer.

The master control module 4 is connected with the lidar scanning module 5, a walking control module 6, a mowing control module 7, a feature information module 25, a safety driving module 11 and a proximity detection module 12. The lidar scanning module 5 comprises a constant-speed circumferential rotation unit 26 and a laser transmitting and receiving unit 27. The feature information module 25 is used for indicating a position where the charging socket 3 is located and providing identification for the mower body 1, an identifying way may adopt lidar or coordinate alignment, and meanwhile, the charging socket 3 may adopt a rugged model or a reflector panel for identification.

The lidar scanning module 5 is mounted on the mower body 1, the constant-speed circumferential rotation unit 26 rotates for 360 DEG at constant speed and acquires information, and the laser transmitting and receiving unit 27 acquires data by virtue of lidar. The walking control module 6 is connected with the master control module 4 and is used for controlling the mower body 1 to move, and the mowing control module 7 is used for controlling the mower body 1 to cut a lawn, so that the mowing aim is achieved. The master control module 4 may build an electronic map 9, the safety driving module 11 is used for controlling the distance from the mower to the fence 2 when the mower drives, and the proximity detection module 12 is arranged at the front end of the mower body 1 and is used for detecting the distance.

The user interaction module 13 is connected with a display module 14, a cutting path module, a path setting module 16, a recording module 17, a selecting module 18, a task progress module 19, a trimming module 23, a synchronization module 24 and a lawn height detection module 22.

The display module 14 is arranged on the user interaction module 13 and is used for displaying data or an image, the cutting path module 15 is used for storing a cutting path of the mower body 1, the path setting module 16 is used for setting the cutting path of the mower body 1, the setting way may adopt a gesture drawing way, the recording module 17 is used for collecting a path setting signal output every time and sorting and recording the path setting signal according to a time sequence, so that finding is convenient to realize, and the selecting module 18 is connected with the recording module 17 and is used for selecting an appropriate trimming path from the recording module 17.

The task progress module 19 comprises a remaining path unit 20 and a remaining time unit 21. The remaining path unit 20 is used for displaying the percentage of a remaining path, and the remaining time unit 21 is used for displaying the remaining trimming time. The trimming module 23 is used for collecting the path setting signal output every time and sorting and recording the path setting signal according to the time sequence, the synchronization module 24 is used for synchronizing a corrected trimming reference signal in a current region, and the lawn height detection module 22 is arranged on the mower body 1 and is used for detecting the height before the lawn is trimmed every time.

Refer to Fig. 1, when the mower body 1 is started, the master control module 4 sends a starting signal and activates the constant-speed circumferential rotation unit 26 and the laser transmitting and receiving unit 27 to build the electronic map 9. After receiving a laser ranging signal and a laser intensity signal, the master control module 4 builds the electronic map 9 containing a boundary and a barrier on a current position, and the walking control module 6 drives the mower body 1 to advance towards the generated electronic map 9, performs repeated feedback by virtue of the lidar scanning module 5 and corrects the electronic map 9 on the current position.

The master control module 4 controls the walking control module 6 to continuously walk and corrects the electronic map 9 on different positions, the walking control module 6 and the mowing control module 7 receive the starting signal and start to work when leaving the charging socket 3, the walking control module 6 moves towards the side, close to the fence 2, in the electronic map 9 and drives along the fence 2 of the lawn, and the master control module 4 updates real-time position information of the mower body 1 on the electronic map 9.

When an initial starting position of the mower body 1 is consistent with the current position, the master control module 4 builds complete electronic map information of the lawn and perfects the electronic map 9, and after the mower body 1 completes cutting, the lidar scanning module 5 identifies the feature information module 25 and advances towards the position where the charging socket 3 is located so as to realize charging.

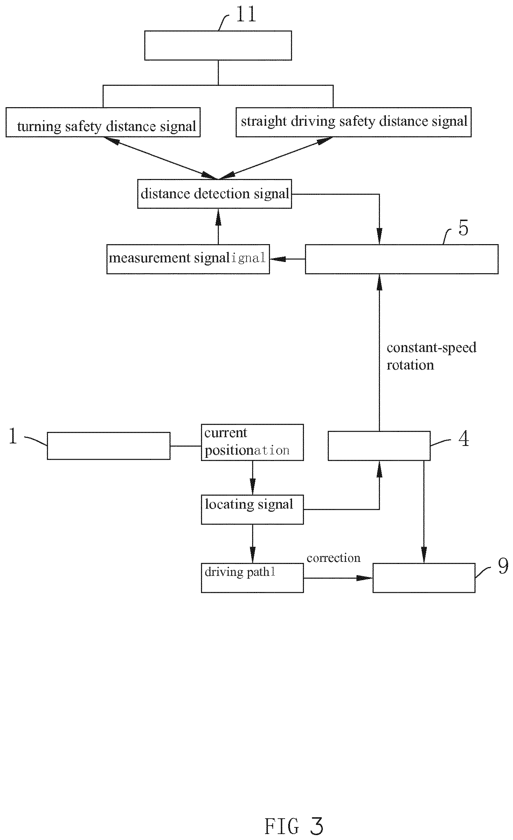

As shown in Fig. 3, a straight driving safety distance signal for indicating the straight driving of the mower body 1 and the fence 2 and a turning safety distance signal for indicating the turning of the mower body 1 and the fence 2 are preset in the safety driving module 11. In addition, scanning detection signals in the lidar scanning module 5 correspond to each other, so that trimming in a safety region is realized.

When the mower body 1 drives, the master control module 4 controls the lidar scanning module 5 to rotate at constant speed, and meanwhile, the mower body 1 drives towards the fence 2 closest to the lidar scanning module 5. Meanwhile, the master control module locates the current position and outputs a locating signal, the lidar scanning module 5 detects and receives a scanning detection signal in real time, the master control module 4 records a path passed by the locating signal and forms a driving path, and the electronic map 9 which primarily formed is corrected by the driving path, so that the accuracy of the map is improved. The position of the locating signal is displayed on the electronic map 9 in real time, and the generated new electronic map 9 is uploaded on the master control module 4.

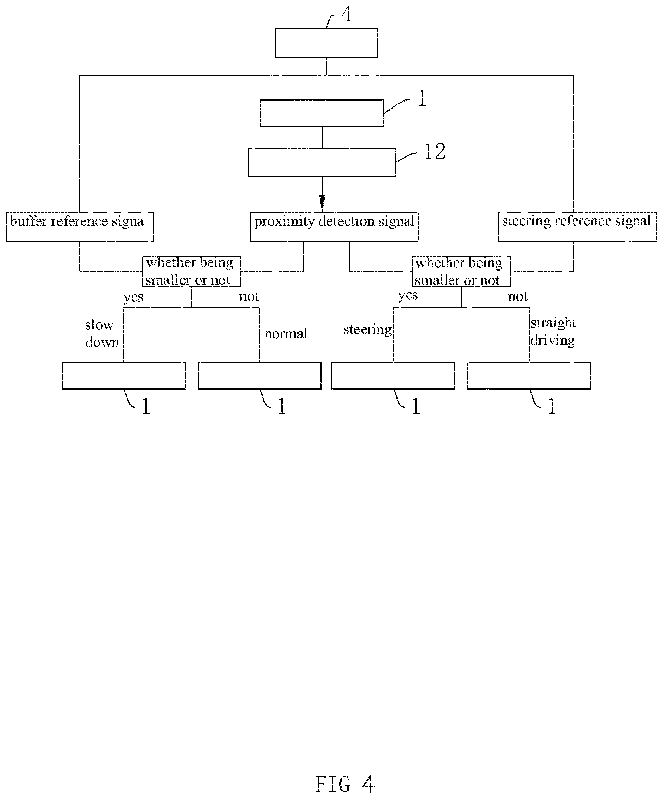

As shown in Fig. 4, the mower body 1 is further provided with the proximity detection module 12, the proximity detection module 12 is arranged at the front end of the mower body 1 and is used for detecting a distance from the mower body to the fence 2 and outputting a proximity detection signal.

A steering reference signal corresponding to a nearest steering distance from the mower body to the fence 2 and a buffer reference signal corresponding to a buffer steering distance from the mower body to the fence 2 are preset in the master control terminal 4. The mower body 1 slows down when the proximity detection signal is smaller than the buffer reference signal; and the mower body 1 keeps driving at a normal speed when the proximity detection signal is not smaller than the buffer reference signal.

The mower body 1 steers when the proximity detection signal is smaller than the steering reference signal; and the mower body 1 keeps driving straightly when the proximity detection signal is not smaller than the buffer reference signal.

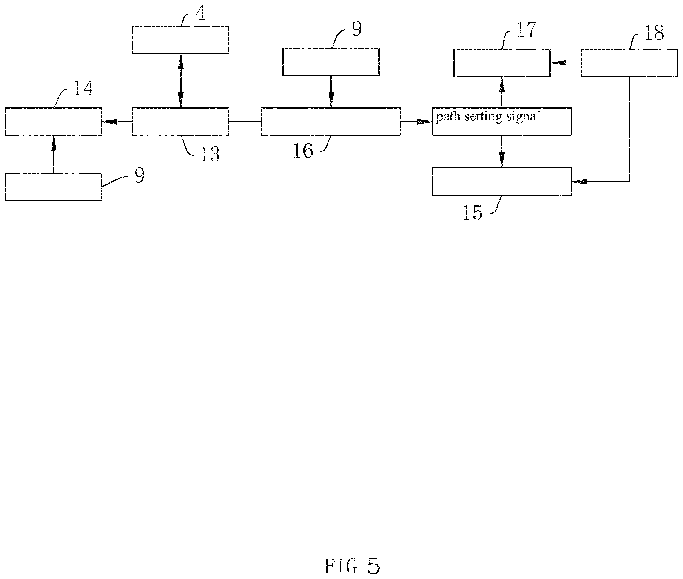

As shown in Fig. 5, the path setting module 16 is used for allowing a user to set a path on the electronic map 9 and outputting a path setting signal, a path setting way may adopt a gesture input way or a drawing way or a data input way. In addition, the path setting signal is recorded by the recording module 17 and is sorted and recorded according to a time sequence.

The selecting module 18 is used for calling the path setting signal from the recording module 17 and is matched with the cutting path module 15 to realize cutting, and the cutting path module 15 takes an updated path setting signal as a first called object and keeps the subsequent calling of the object when the path setting signal is updated.

The display module 14 is connected with the user interaction module 13 and is used for displaying a current position of the mower body 1 on the electronic map 9, so that the position is viewed by people.

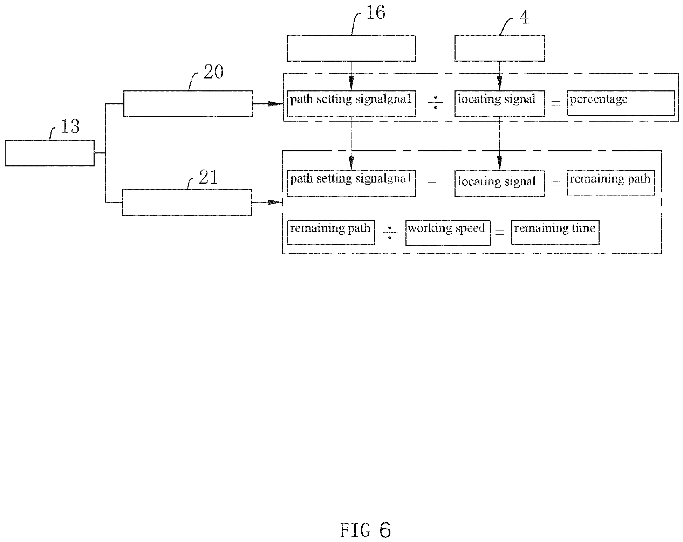

As shown in Fig. 6, the user interaction module 13 is connected with the remaining path unit 20 and the remaining time unit 21, the remaining path unit 20 is used for displaying the percentage of the remaining path, and a way for acquiring the percentage is: the locating signal output by the master control terminal 4 is divided by the path setting signal output by the path setting module 16.

The remaining time unit 21 is used for displaying the remaining time, and a method for calculating the remaining time is: the current position of the locating signal is subtracted by the path setting signal output by the path setting module 16 to obtain a remaining path, and the working speed of the mower body 1 is divided by the remaining path to obtain the remaining time.

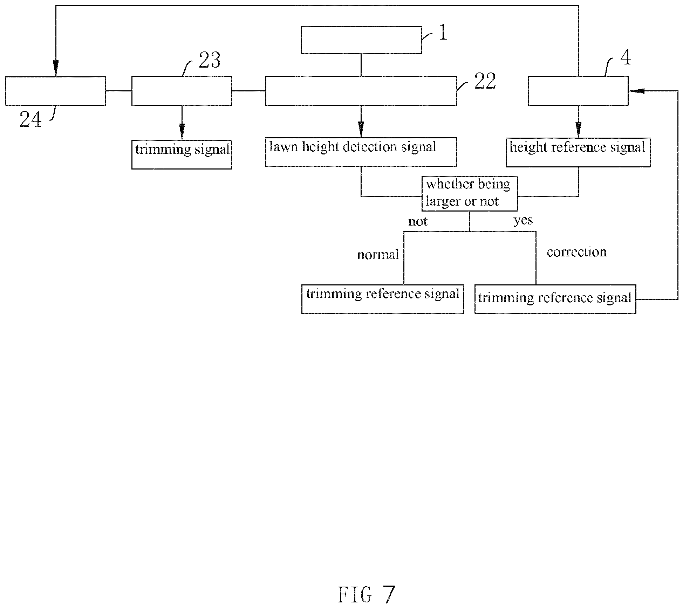

As shown in Fig. 7, the trimming module 23 is used for controlling the trimming of the mower, also recording the trimming time for trimming the lawn every time, generating a trimming signal and uploading the trimming signal to the master control module 4. In addition, a trimming reference signal corresponding to reference time for starting every time and a height reference signal corresponding to the largest height of the lawn are preset in the master control module 4, and corresponding time in the trimming reference signal is adopted when the trimming module 23 is started for the first time.

When the trimming module 23 is started, the lawn height detection module 22 is used for detecting a lawn to be cut and outputting a lawn height detection signal, and when the lawn height detection signal is larger than the height reference signal, the trimming reference signal is corrected, and the time period is pushed forwards; and when the lawn height detection signal is not larger than the height reference signal, the trimming reference signal is not corrected. A later trimming reference signal is not changed when a former trimming reference signal is corrected.

The synchronization module 24 is used for synchronizing a corrected trimming reference signal in a current region, and the trimming module 23 is connected with the synchronization module 24 and is used for correcting and synchronizing the trimming reference signal in the current region, so that it is convenient to call the inside of the current region.

The detailed description is only intended to explain the present invention, rather than to limit the present invention, the embodiment may be modified without creative contribution as required by the skilled in the art after the description is read, however, all the modifications within the scope of claims of the present invention are protected by the patent law.

## Claims

1. An intelligent mower based on lidar map building, comprising a mower body (1) arranged in a lawn, a fence (2) for limiting the range of the lawn and a charging socket (3) arranged in the lawn and used for charging the mower body (1), comprising:
a master control module (4) arranged on the mower body (1) and used for storing and processing data and coordinating other modules;
a feature information module (25) used for allowing the mower body (1) to identify the position of the charging socket (3);
a lidar scanning module (5) arranged on the mower body (1), connected with the master control module (4) and used for acquiring data and building an electronic map (9);
a walking module (6) connected with the master control module (4) and used for controlling the mower body (1) to move; and
a mowing control module (7) connected with the master control module (4) and used for controlling the mower body (1) to cut a lawn;
the lidar scanning module (5) comprising:
a laser transmitting and receiving unit (27) used for outputting a laser ranging signal and a laser intensity signal and uploading the laser ranging signal and the laser intensity signal to the master control module (4); and
a constant-speed circumferential rotation unit (26) used for controlling a laser transmitting and receiving unit (27) to rotate at constant speed and outputting a circumferential rotation angle signal;
the fence (2) is used for limiting the range of the lawn, and objects which can be detected by the lidar scanning module (5) include walls, hedges, shrubs and light reflecting components;
the master control module (4) is configured for sending a starting signal and activating the constant-speed circumferential rotation unit (26) and the laser transmitting and receiving unit (27) to build the electronic map (9) when the mower body (1) is started;
the master control module (4) is configured for building the electronic map (9) containing a boundary and a barrier on a current position after receiving the laser ranging signal, the laser intensity signal and the rotation angle signal;
the walking module (6) is configured for driving the mower body (1) to advance in the generated electronic map (9), performing repeated feedback by virtue of the lidar scanning module (5) and correcting the electronic map (9) on the current position;
the master control module (4) is configured for controlling the walking module (6) to continuously walk and correcting the electronic map (9) on different positions;
the walking module (6) and the mowing control module (7) are configured for receiving the starting signal and starting to work when leaving the charging socket (3), the walking module (6) is configured for moving towards the side, close to the fence (2), in the electronic map (9) and driving along the fence (2) of the lawn, and the master control module (4) is configured for updating electronic map information and real-time position information of the mower body (1) on the electronic map (9);
the master control module (4) is configured for building complete electronic map information of the lawn and planning a mowing path of the mower body (1) when an initial starting position of the mower body (1) is consistent with the current position; and
the lidar scanning module (5) is configured for identifying the feature information module (25) and advancing towards the position where the charging socket (3) is located so as to realize charging after the mower body (1) completes cutting according to the path planning,
the intelligent mower further comprising a proximity detection module (12) arranged on the mower body (1), connected with the master control module (4) and used for detecting a distance from the mower body to the fence (2) and the barrier in the lawn and outputting a proximity detection signal;
a steering reference signal corresponding to a nearest steering distance from the mower body to the fence (2) and the barrier in the lawn being preset in a master control terminal; and
the master control module (4) controlling the mower body (1) to steer when the proximity detection signal output by the proximity detection module (12) is smaller than the steering reference signal,
**characterized in that** a buffer reference signal corresponding to a buffer steering distance from the mower body to the fence (2) is preset in the master control terminal; and
the master control module (4) is configured for controlling the mower body (1) to slow down when the proximity detection signal output by the proximity detection module (12) is smaller than the buffer reference signal.

2. The intelligent mower based on lidar map building of claim 1, **characterized by** further comprising:
a user interaction module (13) connected with the master control module (4) and used for establishing communication and performing data transmission; and
a display module (14) connected with the user interaction module (13) and used for displaying a current position of the mower body (1) on the electronic map (9).

3. The intelligent mower based on lidar map building of claim 2, **characterized by** further comprising:
a cutting path module (15) connected with the user interaction module (13) and used for controlling the mower body (1) to cut according to a path; and
a path setting module (16) connected with the user interaction module (13) and used for setting the path on the electronic map (9) by a user and outputting a path setting signal;
the path setting signal being received and stored by the user interaction module (13) so as to be called by the cutting path module (15); and
the cutting path module (15) taking an updated path setting signal as a first called object and keeping the subsequent calling of the object when the path setting signal is updated.

4. The intelligent mower based on lidar map building of claim 3, **characterized by** further comprising:
a recording module (17) connected with the user interaction module (13) and used for collecting the path setting signal output every time and sorting and recording the path setting signal according to a time sequence; and
a selecting module (18) connected with the user interaction module (13) and used for calling the path setting signal in the recording module (17) so as to start the cutting path module (15).

5. The intelligent mower based on lidar map building of claim 3, **characterized by** further comprising a task progress module (19) connected with the user interaction module (13) and used for counting the completeness of the path setting signal in the current cutting path module (15), the master control terminal (4) outputting a locating signal corresponding to the current position on the current position;
the task progress module (19) comprising:
a remaining path unit (20) used for analyzing and displaying a passed path and an unpassed path of the path setting module (16) according to a percentage through the locating signal; and
a remaining time unit (21) used for obtaining remaining time by dividing the working speed of the mower body (1) by the unpassed path in the remaining path unit (20) and displaying the remaining time.

6. The intelligent mower based on lidar map building of claim 2, **characterized by** further comprising:
a lawn height detection module (22) arranged on the mower body (1) and used for detecting the height before the lawn is trimmed every time and outputting a lawn height detection signal; and
a trimming module (23) used for recording trimming time for trimming the lawn every time, generating a trimming signal and uploading the trimming signal to the master control module (4);
a trimming reference signal corresponding to reference time for starting every time and a height reference signal corresponding to the largest height of the lawn being preset in the user interaction module (13);
when the trimming module (23) is started to trim the lawn, the height of the lawn being detected, and a lawn height detection signal being output, and when the lawn height detection signal is larger than the height reference signal, the user interaction module (13) correcting the trimming reference signal so that early trimming being realized; and
a later trimming reference signal being not changed when a former trimming reference signal is corrected.

7. The intelligent mower based on lidar map building of claim 6, **characterized by** further comprising a synchronization module (24) connected with the user interaction module (13) and used for synchronizing a corrected trimming reference signal in a current region, and the trimming module (23) being connected with the synchronization module (24) and used for correcting the trimming reference signal in the current region.

## Patentansprüche

1. Intelligenter Mäher auf Basis von Lidar-Kartenerstellung, mit einem in einer Rasenfläche angeordneten Mähkörper (1), einem Zaun (2) zur Begrenzung der Weite der Rasenfläche und einer in der Rasenfläche angeordneten Ladesteckdose (3), die zum Aufladen des Mähkörpers (1) dient, mit:
einem am Mähkörper (1) angeordneten Hauptsteuermodul (4), das zur Speicherung und Verarbeitung von Daten und zur Koordination anderer Module dient;
ein Merkmalsinformationsmodul (25), das dem Mähkörper (1) dazu dient, die Position der Ladebuchse (3) zu erkennen;
einem am Mähkörper (1) angeordneten Lidar-Scan-Modul (5), das mit dem Master-Steuermodul (4) verbunden ist und zur Datenerfassung und zum Aufbau einer elektronischen Karte (9) dient;
ein Laufmodul (6), das mit dem Hauptsteuermodul (4) verbunden ist und dazu dient, die Bewegung des Mähkörpers (1) zu steuern; und
ein Mähsteuermodul (7), das mit dem Hauptsteuermodul (4) verbunden ist und zur Steuerung des Mähkörpers (1) zum Mähen eines Rasens dient;
das Lidar-Scan-Modul (5) umfasst:
eine Laser-Sende- und -Empfangseinheit (27), die zum Ausgeben eines Laser-Entfernungsmesssignals und eines Laser-Intensitätssignals und zum Hochladen des Laser-Entfernungsmesssignals und des Laser-Intensitätssignals in das Hauptsteuermodul (4) verwendet wird; und
eine Umfangsrotationseinheit (26) mit konstanter Geschwindigkeit, die verwendet wird, um eine Laser-Sende- und -Empfangseinheit (27) so zu steuern, dass sie sich mit konstanter Geschwindigkeit dreht und ein Umfangsrotationswinkelsignal ausgibt;
der Zaun (2) dient zur Begrenzung der Reichweite des Rasens, und zu den Objekten, die vom Lidar-Scan-Modul (5) erfasst werden können, gehören Mauern, Hecken, Sträucher und lichtreflektierende Bauteile;
das Hauptsteuermodul (4) ist so konfiguriert, dass es ein Startsignal sendet und die Konstantdrehzahl-Umfangsrotationseinheit (26) und die Laser-Sende- und -Empfangseinheit (27) aktiviert, um das elektronische Kennfeld (9) aufzubauen, wenn der Mähkörper (1) gestartet wird;
das Hauptsteuermodul (4) ist so konfiguriert, dass es die elektronische Karte (9), die eine Grenze und eine Barriere enthält, auf einer aktuellen Position aufbaut, nachdem es das Laser-Entfernungsmesssignal, das Laser-Intensitätssignal und das Rotationswinkelsignal empfangen hat;
das Laufmodul (6) ist so konfiguriert, dass es den Mähkörper (1) antreibt, um in der erzeugten elektronischen Karte (9) voranzukommen, wobei eine wiederholte Rückmeldung durch das Lidar-Scan-Modul (5) erfolgt und die elektronische Karte (9) auf die aktuelle Position korrigiert wird;
das Hauptsteuermodul (4) ist so konfiguriert, dass es das Laufmodul (6) zum kontinuierlichen Gehen und zur Korrektur der elektronischen Karte (9) an verschiedenen Positionen steuert;
das Laufmodul (6) und das Mähsteuermodul (7) sind so konfiguriert, dass sie das Startsignal empfangen und mit der Arbeit beginnen, wenn sie die Ladebuchse (3) verlassen, das Laufmodul (6) ist so konfiguriert, dass es sich in der elektronischen Karte (9) in Richtung der Seite nahe des Zauns (2) bewegt und entlang des Zauns (2) des Rasens fährt, und das Hauptsteuermodul (4) ist so konfiguriert, dass es elektronische Karteninformationen und Echtzeit-Positionsinformationen des Mähkörpers (1) in der elektronischen Karte (9) aktualisiert;
das Hauptsteuermodul (4) ist so konfiguriert, dass es vollständige elektronische Karteninformationen des Rasens aufbaut und einen Mähweg des Mähkörpers (1) plant, wenn eine anfängliche Startposition des Mähkörpers (1) mit der aktuellen Position übereinstimmt; und
das Lidar-Abtastmodul (5) ist so konfiguriert, dass es das Merkmalsinformationsmodul (25) identifiziert und sich zu der Position bewegt, an der sich die Ladebuchse (3) befindet, um den Ladevorgang zu realisieren, nachdem der Mähkörper (1) das Schneiden gemäß der Bahnplanung abgeschlossen hat,
der intelligente Mäher umfasst ferner ein am Mähkörper (1) angeordnetes Näherungserkennungsmodul (12), das mit dem Hauptsteuermodul (4) verbunden ist und dazu dient, den Abstand des Mähkörpers zum Zaun (2) und der Barriere im Rasen zu erkennen und ein Näherungserkennungssignal auszugeben;
ein Lenkreferenzsignal, das einem nächstgelegenen Lenkabstand vom Mähkörper zum Zaun (2) und der Barriere im Rasen entspricht und in einem Hauptsteuerterminal voreingestellt ist; und
das Hauptsteuermodul (4) steuert den Mähkörper (1), so dass er gelenkt wird, wenn das vom Näherungserkennungsmodul (12) ausgegebene Näherungserkennungssignal kleiner als das Lenkreferenzsignal ist,
**dadurch gekennzeichnet, dass** ein Pufferreferenzsignal, das einem Pufferlenkabstand vom Mähkörper zum Zaun (2) entspricht, in dem Hauptsteuerterminal voreingestellt ist; und
das Hauptsteuermodul (4) so konfiguriert ist, dass es den Mähkörper (1) so steuert, dass er langsamer wird, wenn das vom Näherungserkennungsmodul (12) ausgegebene Näherungserkennungssignal kleiner als das Pufferreferenzsignal ist.

2. Intelligenter Mäher auf der Basis von Lidar-Kartenerstellung nach Anspruch 1, **dadurch gekennzeichnet, dass** er weiterhin umfasst:
ein Benutzerinteraktionsmodul (13), das mit dem Hauptsteuermodul (4) verbunden ist und zum Aufbau der Kommunikation und zur Durchführung der Datenübertragung dient; und
ein Anzeigemodul (14), das mit dem Benutzerinteraktionsmodul (13) verbunden ist und zur Anzeige einer aktuellen Position des Mähkörpers (1) auf der elektronischen Karte (9) dient.

3. Intelligenter Mäher auf der Basis von Lidar-Kartenerstellung nach Anspruch 2, **dadurch gekennzeichnet, dass** er weiterhin umfasst:
ein Schneidpfadmodul (15), das mit dem Benutzerinteraktionsmodul (13) verbunden ist und zur Steuerung des Mähkörpers (1) zum Schneiden gemäß einem Pfad verwendet wird; und
ein Pfadsetzmodul (16), das mit dem Benutzerinteraktionsmodul (13) verbunden ist und dazu dient, den Pfad auf der elektronischen Karte (9) durch einen Benutzer zu setzen und ein Pfadsetzsignal auszugeben;
wobei das Pfadeinstellungssignal von dem Benutzerinteraktionsmodul (13) empfangen und gespeichert wird, um von dem Schneidpfadmodul (15) aufgerufen zu werden; und
das Schneidpfadmodul (15) ein aktualisiertes Pfadeinstellungssignal als ein erstes aufgerufenes Objekt nimmt und den nachfolgenden Aufruf des Objekts beibehält, wenn das Pfadeinstellungssignal aktualisiert wird.

4. Intelligenter Mäher basierend auf Lidar-Kartenerstellung nach Anspruch 3, **dadurch gekennzeichnet, dass** er weiterhin umfasst:
ein Aufzeichnungsmodul (17), das mit dem Benutzerinteraktionsmodul (13) verbunden ist und zum Sammeln des jedes Mal ausgegebenen Pfadsetzungssignals und zum Sortieren und Aufzeichnen des Pfadsetzungssignals gemäß einer Zeitfolge verwendet wird; und
ein Auswahlmodul (18), das mit dem Benutzerinteraktionsmodul (13) verbunden ist und zum Aufrufen des Pfadeinstellsignals im Aufzeichnungsmodul (17) verwendet wird, um das Schneidpfadmodul (15) zu starten.

5. Intelligenter Mäher basierend auf Lidar-Kartenerstellung nach Anspruch 3, **dadurch gekennzeichnet, dass** er ferner ein Aufgabenfortschrittsmodul (19) umfasst, das mit dem Benutzerinteraktionsmodul (13) verbunden ist und zum Zählen der Vollständigkeit des Pfadsetzungssignals im aktuellen Schneidwegmodul (15) verwendet wird, wobei das Hauptsteuerterminal (4) ein der aktuellen Position entsprechendes Ortungssignal an der aktuellen Position ausgibt;
das Aufgabenfortschrittsmodul (19) umfasst:
eine Restpfadeinheit (20), die zum Analysieren und Anzeigen eines durchlaufenen Pfades und eines nicht durchlaufenen Pfades des Pfadsetzmoduls (16) gemäß einem Prozentsatz durch das Ortungssignal dient; und
eine Restzeiteinheit (21), die dazu dient, die Restzeit zu erhalten, indem die Arbeitsgeschwindigkeit des Mähkörpers (1) durch den nicht befahrenen Pfad in der Restpfadeinheit (20) dividiert wird, und die Restzeit anzuzeigen.

6. Intelligenter Mäher auf der Basis von Lidar-Kartenerstellung nach Anspruch 2, **dadurch gekennzeichnet, dass** er weiterhin umfasst:
ein am Mähkörper (1) angeordnetes Rasenhöhen-Erfassungsmodul (22), das dazu dient, die Höhe vor jedem Trimmen des Rasens zu erfassen und ein Rasenhöhen-Erfassungssignal auszugeben; und
ein Trimmmodul (23), das dazu dient, die Trimmzeit für das Trimmen des Rasens jedes Mal zu erfassen, ein Trimmsignal zu erzeugen und das Trimmsignal an das Hauptsteuermodul (4) zu übertragen;
ein Trimmreferenzsignal, das der Referenzzeit für den Start jedes Mal entspricht, und ein Höhenreferenzsignal, das der größten Höhe des Rasens entspricht, die im Benutzerinteraktionsmodul (13) voreingestellt ist;
wobei, wenn das Trimmmodul (23) gestartet wird, um den Rasen zu trimmen, die Höhe des Rasens erfasst wird und ein Rasenhöhenerfassungssignal ausgegeben wird, und wenn das Rasenhöhenerfassungssignal größer als das Höhenreferenzsignal ist, das Benutzerinteraktionsmodul (13) das Trimmreferenzsignal korrigiert, so dass ein frühes Trimmen realisiert wird; und
wobei ein späteres Trimmreferenzsignal nicht verändert wird, wenn ein früheres Trimmreferenzsignal korrigiert wird.

7. Intelligenter Mäher basierend auf Lidar-Kartenerstellung nach Anspruch 6, **dadurch gekennzeichnet, dass** er ferner ein Synchronisationsmodul (24) umfasst, das mit dem Benutzerinteraktionsmodul (13) verbunden ist und zum Synchronisieren eines korrigierten Trimmreferenzsignals in einem aktuellen Bereich verwendet wird, und das Trimmmodul (23) mit dem Synchronisationsmodul (24) verbunden ist und zum Korrigieren des Trimmreferenzsignals in dem aktuellen Bereich verwendet wird.

## Revendications

1. Tondeuse intelligente basée sur la construction de cartes de lidar, comprenant un corps de tondeuse (1) disposé dans un gazon, une clôture (2) pour délimiter l'étendue du gazon et une prise de charge (3) disposée dans le gazon et utilisée pour charger le corps de tondeuse (1), comprenant :
un module de commande principal (4) disposé sur le corps de tondeuse (1) et utilisé pour le stockage et les données de traitement et la coordination d'autres modules ;
un module d'information sur les caractéristiques (25) utilisé pour permettre au corps de tondeuse (1) d'identifier la position de la prise de charge (3) ;
un module de balayage lidar (5) disposé sur le corps de tondeuse (1), relié au module de commande principal (4) et utilisé pour l'acquisition de données et la construction d'une carte électronique (9) ;
un module de marche (6) relié au module de commande principal (4) et utilisé pour commander le déplacement du corps de tondeuse (1) ; et
un module de commande de tonte (7) relié au module de commande principal (4) et utilisé pour commander le corps de tondeuse (1) de couper un gazon ;
le module de balayage lidar (5) comprenant :
une unité d'émission et de réception laser (27) utilisée pour émettre un signal de télémétrie laser et un signal d'intensité laser et pour télécharger le signal de télémétrie laser et le signal d'intensité laser vers le module de commande principal (4) ; et
une unité de rotation circonférentielle à vitesse constante (26) utilisée pour commander une unité d'émission et de réception laser (27) pour qu'elle tourne à vitesse constante et émette un signal d'angle de rotation circonférentielle ;
la clôture (2) est utilisée pour délimiter l'étendue du gazon, et des objets qui peuvent être détectés par le module de balayage lidar (5) comprennent des murs, des haies, des arbustes et des éléments réfléchissant la lumière ;
le module de commande principal (4) est configuré pour envoyer un signal de démarrage et activer l'unité de rotation circonférentielle à vitesse constante (26) et l'unité d'émission et de réception laser (27) pour construire la carte électronique (9) lorsque le corps de tondeuse (1) est démarré ;
le module de commande principal (4) est configuré pour construire la carte électronique (9) contenant une limite et une barrière sur une position actuelle après réception du signal de télémétrie laser, du signal d'intensité laser et du signal d'angle de rotation ;
le module de marche (6) est configuré pour faire avancer le corps de tondeuse (1) dans la carte électronique (9) générée, effectuer un retour d'information répété grâce au module de balayage lidar (5) et corriger la carte électronique (9) sur la position actuelle ;
le module de commande principal (4) est configuré pour commander le module de marche (6) pour une marche en continu et corriger la carte électronique (9) sur différentes positions ;
le module de marche (6) et le module de commande de tonte (7) sont configurés pour recevoir le signal de démarrage et commencer à travailler en quittant la prise de charge (3), le module de marche (6) est configuré pour se déplacer vers le côté, près de la clôture (2), dans la carte électronique (9) et pour avancer le long de la clôture (2) du gazon, et le module de commande principal (4) est configuré pour mettre à jour les informations de la carte électronique et les informations de position en temps réel du corps de tondeuse (1) sur la carte électronique (9) ;
le module de commande principal (4) est configuré pour construire des informations de carte électronique complètes du gazon et planifier un trajet de tonte du corps de tondeuse (1) lorsqu'une position de départ initiale du corps de tondeuse (1) est cohérente avec la position actuelle ; et
le module de balayage lidar (5) est configuré pour identifier le module d'information sur les caractéristiques (25) et avancer vers la position où se trouve la prise de charge (3) afin de réaliser la charge une fois que le corps de tondeuse (1) a terminé la coupe conformément à la planification du trajet,
la tondeuse intelligente comprend en outre un module de détection de proximité (12) disposé sur le corps de tondeuse (1), relié au module de commande principal (4) et utilisé pour détecter une distance du corps de tondeuse à la clôture (2) et la barrière dans le gazon et émettre un signal de détection de proximité ;
un signal de référence de direction correspondant à une distance de direction la plus proche entre le corps de tondeuse et la clôture (2) et la barrière dans le gazon étant préréglée dans un terminal de commande principal ; et
le module de commande principal (4) qui commande la direction du corps de tondeuse (1) lorsque le signal de détection de proximité émis par le module de détection de proximité (12) est inférieur au signal de référence de direction,
**caractérisée en ce qu'**un signal de référence tampon correspondant à une distance de direction tampon entre le corps de tondeuse et la clôture (2) est préréglé dans le terminal de commande principal ; et
le module de commande principal (4) est configuré pour commander le ralentissement du corps de tondeuse (1) lorsque le signal de détection de proximité émis par le module de détection de proximité (12) est inférieur au signal de référence tampon.

2. Tondeuse intelligente basée sur la construction de cartes de lidar selon la revendication 1, **caractérisée en ce qu'**elle comprend en outre :
un module d'interaction utilisateur (13) relié au module de commande principal (4) et utilisé pour établir la communication et effectuer la transmission de données ; et
un module d'affichage (14) relié au module d'interaction utilisateur (13) et utilisé pour afficher une position actuelle du corps de tondeuse (1) sur la carte électronique (9).

3. Tondeuse intelligente basée sur la construction de cartes de lidar selon la revendication 2, **caractérisée en ce qu'**elle comprend en outre :
un module de trajet de coupe (15) relié au module d'interaction utilisateur (13) et utilisé pour commander le corps de tondeuse (1) de couper selon un trajet ; et
un module de réglage de trajet (16) relié au module d'interaction utilisateur (13) et utiliser pour régler le trajet sur la carte électronique (9) par un utilisateur et émettre un signal de réglage de trajet ;
le signal de réglage de trajet étant reçu et mémorisé par le module d'interaction utilisateur (13) de manière à être appelé par le module de trajet de coupe (15) ; et
le module de trajet de coupe (15) prenant un signal de réglage de trajet mis à jour comme premier objet appelé et conservant l'appel ultérieur de l'objet lorsque le signal de réglage de trajet est mis à jour.

4. Tondeuse intelligente basée sur la construction de cartes de lidar selon la revendication 3, **caractérisée en ce qu'**elle comprend en outre :
un module d'enregistrement (17) relié au module d'interaction utilisateur (13) et utilisé pour capter le signal de réglage de trajet émis à chaque fois et pour trier et enregistrer le signal de réglage de trajet selon une séquence de temps ; et
un module de sélection (18) relié au module d'interaction utilisateur (13) et utilisé pour appeler le signal de réglage de trajet dans le module d'enregistrement (17) de manière à démarrer le module de trajet de coupe (15).

5. Tondeuse intelligente basée sur la construction de cartes de lidar selon la revendication 3, **caractérisée en ce qu'**elle comprend en outre un module d'avancement des tâches (19) relié au module d'interaction utilisateur (13) et utilisé pour compter l'intégralité du signal de réglage de trajet dans le module de trajet de coupe (15) actuel, le terminal de commande principal (4) émettant un signal de localisation correspondant à la position actuelle sur la position actuelle ;
le module d'avancement des tâches (19) comprenant :
une unité de trajet restant (20) utilisée pour analyser et afficher un trajet effectué et un trajet non effectué du module de réglage de trajet (16) selon un pourcentage par le signal de localisation ; et
une unité de temps restant (21) utilisée pour obtenir le temps restant en divisant la vitesse de travail du corps de tondeuse (1) par le trajet non effectué dans l'unité de trajet restant (20) et en affichant le temps restant.

6. Tondeuse intelligente basée sur la construction de cartes de lidar selon la revendication 2, **caractérisée en ce qu'**elle comprend en outre :
un module de détection de hauteur de gazon (22) disposé sur le corps de tondeuse (1) et utilisé pour détecter la hauteur avant chaque taille du gazon et pour émettre un signal de détection de hauteur de gazon ; et
un module de taillage (23) utilisé pour enregistrer le temps de taillage pour chaque taille de gazon, générer un signal de taillage et télécharger le signal de taillage vers le module de commande principal (4) ;
un signal de référence de taillage correspondant à un temps de référence pour chaque démarrage et un signal de référence de hauteur correspondant à la plus grande hauteur de gazon préréglée dans le module d'interaction utilisateur (13),
lorsque le module de taillage (23) est démarré pour tailler le gazon, la hauteur du gazon est détectée, et un signal de détection de hauteur de gazon est émis, et lorsque le signal de détection de hauteur de gazon est supérieur au signal de référence de hauteur, le module d'interaction utilisateur (13) corrige le signal de référence de taillage afin qu'une taille précoce soit réalisée ; et
un signal de référence de taillage ultérieur n'étant pas modifié lorsqu'un signal de référence de taillage antérieur est corrigé.

7. Tondeuse intelligente basée sur la construction de cartes de lidar selon la revendication 6, **caractérisée en ce qu'**elle comprend en outre un module de synchronisation (24) relié au module d'interaction utilisateur (13) et utilisé pour synchroniser un signal de référence de taillage corrigé dans une zone actuelle, et le module de taillage (23) étant relié au module de synchronisation (24) et utilisé pour corriger le signal de référence de taillage dans la zone actuelle.
